# EUROPEAN PATENT SPECIFICATION

(11) **EP 2 516 890 B1**
(45) Date of publication and mention of the grant of the patent: **20.11.2013**
(21) Application number: 10798516.0
(22) Date of filing: 22.12.2010
(51) Int. Cl.: F16G 5/16

(54) **AN ENDLESS TENSION MEMBER FOR A DRIVE BELT, DRIVE BELT EQUIPPED THEREWITH AND MANUFACTURING METHOD FOR IT**
ENDLOSSPANNELEMENT FÜR EINEN ANTRIEBSRIEMEN, ANTRIEBSRIEMEN DAMIT UND HERSTELLUNGSVERFAHREN DAFÜR
CÂBLE DE TENSION SANS FIN POUR COURROIE DE TRANSMISSION, COURROIE DE TRANSMISSION ÉQUIPÉE DE CE DERNIER ET PROCÉDÉ DE FABRICATION DUDIT CÂBLE

(30) Priority: 23.12.2009 NL 1037582
(43) Date of publication of application: 31.10.2012
(73) Proprietor: Robert Bosch GmbH, 70442 Stuttgart (DE)
(72) Inventor: CREBOLDER, Cornelia, Adriana, Elizabeth, NL-4706 WG Roosendaal (NL); PIJPERS, Hubertus, Elisabeth, Johannes, NL-5581 JM Waalre (NL)
(74) Representative: Plevier, Gabriel Anton Johan Maria
(86) International application number: PCT/EP2010/007860
(87) International publication number: WO 2011/076398

(56) References cited:
- JP-A- 59 054 838
- JP-A- 59 164 433
- JP-U- 59 066 048
- JP-U- 60 010 943
- US-A- 4 552 550
- US-A- 6 030 308

## Description

The present invention relates to an endless tension member according to the preamble to the following Claim 1. Such a tension member known from its application in drive belts that are used to transfer a drive power in a transmission, wherein the drive belt is passed around two or more rotatable pulleys each defining a tapered groove wherein the drive belt is held in a tensioned state. A commonly known application of such a transmission is the so-called continuously variable transmission of 2-wheeled motor vehicles, such as scooters. The present type of tension member and the drive belt incorporating it are described in detail in the International patent publication WO-A-2008/094035.

The known drive belt comprises a series of discrete transverse elements that are each fixed to the endless tension member, typically by means of mutually interlocking parts thereof. The drive belt serves to rotationally drive or be driven by a pulley, whereto these transmission components frictionally engage one another. Hereby, one side, the taut side of the drive belt is tensioned to a higher degree than the other side, the slack side of the drive belt, the accompanying tension forces being carried by the endless tension member of the drive belt and being exchanged with the pulleys via the transverse elements.

The known endless tension member is composed of a flat, thin and hence flexible metal tension ring that actually carries the tension forces and an elastomeric ring carrier that contains such tension ring. More specifically, the tension ring is provided with a predominantly rectangular cross-section having a dimension in radial direction amounting to between 1% and 10%, preferably between 2% and 4%, of its dimension in the axial direction.

The ring carrier provides an intermediary layer between the transverse elements and the tension ring, such that direct, physical contact between the latter two parts does not occur. Along its circumference, the ring carrier is typically provided with recesses and or protrusions that interlock with the transverse elements at least in the circumference direction of the drive belt.

Each transverse element is provided with two main faces oriented in the circumference direction of the drive belt and with two side faces placed at an acute angle to each other, which side faces extend on both sides of the transverse element between the main faces and are intended for the frictional contact with the transmission pulleys. The transverse element describes one or two openings, which extend(s) substantially in the axial, i.e. width direction up to a respective side face thereof, through which opening an endless tension element is led. A first part of the transverse element is thus located radially inside the endless tension element, a second part radially outside it, and a third part of the transverse element, which is situated between the first and the second part thereof and connects these two parts together; is located at the radial level, i.e. height of the endless tension element or elements.

The above, known drive belt functions quite well, however, was found to be prone to vibrations at least at the highest rotational speed of the transmission pulleys. These vibrations concern an oscillating movement of a part of the drive belt that crosses over between the pulleys. Drive belt vibrations are principally undesired because they generate noise and also because they additionally load and stress in particular the tension ring, thus reducing the useful load-carrying capacity and/or service life of the drive belt.

The present invention aims to significantly reduce and, hence, to improve the load-bearing capacity of the drive belt. The drive belt according to the invention is described in Claim 1 hereinafter.

It is a universal characteristic of the known drive belt designs that the ring carrier is adhesively or chemically bonded to the tension ring, such that these two components that make-up the endless tension element form an integral part. Thereto, the forming process of the endless tension element includes suspending the tension ring centrally in a circular mold and injecting or otherwise forcing the base material(s) of the ring carrier into the mold in a viscous, i.e. heated and/or non-vulcanized state. Thereafter, the ring carrier material is allowed to polymerize, vulcanize and/or cool down as the case may be, before the endless tension element is removed from the mold. Often a primer is pre-applied to the tension ring to improve the bonding thereof to the ring carrier.

In this conventional forming process and at least in the material injection phase, the radial position of the tension ring inside the circular mold can locally change along its circumference. Also, the shape of the tension ring may not perfectly correspond to that of the mold, e.g. may not be perfectly circular but include a certain waviness to begin with. As a result, variations of the radial position of the tension ring occur within the endless tension element along the circumference thereof.

Applicant has developed and confirmed the hypothesis that the above-described radial variations of the position of the tension ring inside the endless tension element contribute to the undesired drive belt vibrations observed during operation. Accordingly, the desire to improve the accuracy of the said radial position of the tension ring was formulated, which led to the present invention.

The present invention involves producings the ring carrier separately from the tension ring and assembling the endless tension element from such separate and/or separable components. This manufacturing method thus allows the ring carrier to be produced with a highly accurate shape that supports the desired, invariable radial position of the tension ring. A further advantage of this manufacturing method is that previously unsuitable materials for (the molding of) the ring carrier become feasible, such as thermosetting plastics. Moreover, an ultimately basic mold design may be used to produce the ring carrier, e.g. without pins for suspending the tension ring in the center of the mold. Finally, the delicate and/or cumbersome process step of suspending the tension ring in the ring carrier mold is favorably circumvented.

According to the invention, the ring carrier is produced as a single part defining a central cavity or opening wherein the tension ring can be placed. The ring carrier may be produced in the shape of an endless ring or as a linear (extruded) profile that is cut to length and bent into the required ring-shape. In the latter case, coupling means such as mutually interlocking parts can be provided to the ends of such cut profile for fixing these ends together to form the said required ring-shape. Alternatively, at least one transverse element may be provided with means for interlocking with such cut profile.

The chemical bond between the tension ring and the ring carrier is not necessarily required for the proper functioning of the drive belt. Apparently, the friction between these two components is sufficient thereto, which friction may be supported by designing the transverse elements such that they exert a radially oriented compressive force on the ring carrier, e.g. by providing the said third part of the transverse element with a smaller radial or height dimension than the corresponding dimension of the ring carrier. Moreover, if necessary, the tension ring and the ring carrier may be glued together, i.e. at assembly of the endless tension element, or, if the ring carrier is made from rubber.

The invention is explained in greater detail below with reference to preferred embodiments thereof that are illustrated in the accompanying drawing figures.
Figure 1 represents a schematic side view of the known drive belt.
Figure 2 schematically shows a first cross section of the known drive belt.
Figure 3 schematically shows a second cross section of the known drive belt.
Figure 4 represents a schematic cross section of a first preferred embodiment of the drive belt's endless tension member in accordance with the invention.
Figure 5
Figure 6 represents a schematic cross section of a further preferred embodiment of the endless tension member in accordance with the invention.

In the figures, the same or similar structural parts of the drive belt are respectively indicated with the same reference numerals.

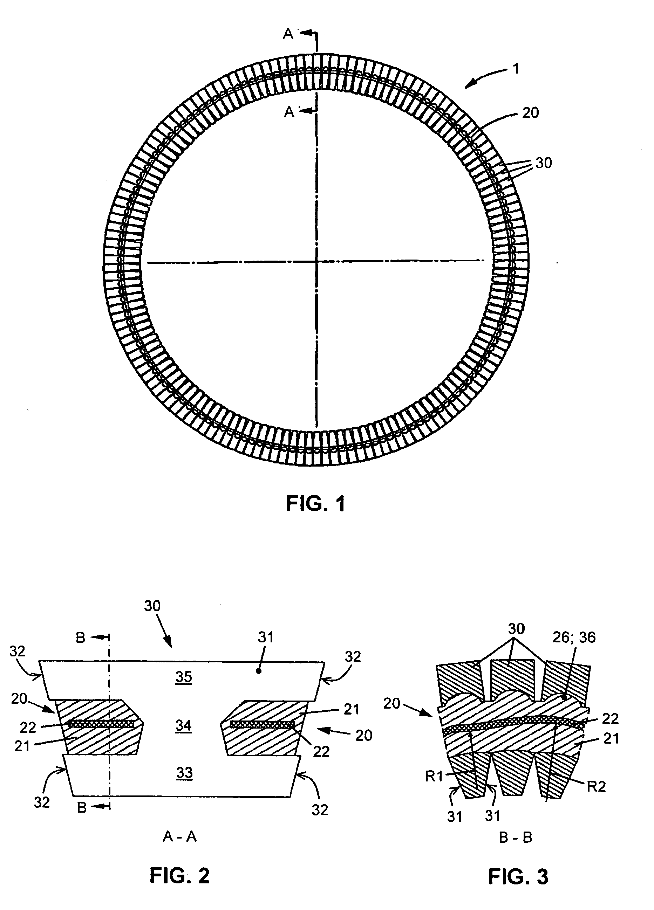

Figures 1, 2 and 3 show the known drive belt 1, wherein Figure 1 represents a side view thereof, Figure 2 the cross section A-A thereof facing in the circumference direction of the belt 1, and Figure 3 the cross section B-B thereof facing in the axial direction.

The known drive belt 1 is provided with two self-contained endless tension elements 20 that both consist of a flexible tension ring 22 with a predominantly rectangular cross-section embedded in a likewise flexible ring carrier 21. In addition, the known drive belt 1 comprises an, at least virtually, continuous series of so-called transverse elements 30.

The transverse elements 30 are provided with a small dimension or thickness in the circumference direction of the drive belt 1, at least in comparison to the axial or width and the radial or height dimensions thereof. Each transverse element 30 includes two main faces 31 that are oriented in mutually opposite circumference directions of the drive belt 1, as well as two side faces 32 placed at an acute angle to each other, which side faces 32 extend on both sides of the transverse element 30 between the main faces 31 thereof and are intended for the frictional contact with pulleys of the transmission wherein it is to be applied. The transverse element 30 describes two openings, through which the endless tension elements 20 are led. A first part 33 of the transverse element 30 is therefore located radially inside the endless tension element 20, a second part 35 radially outside of it, and a third part 34 of the transverse element 30, which is situated between the said first and second parts 33, 35 thereof and which connects these to each other, is located at the (radial) height of the endless tension elements 20.

The ring carrier 21 of the endless tension element 20 is made of a relatively compliant material, such as an elastomere (rubber) or a soft plastic, whilst the transverse elements 30 are made specifically of a rigid and, preferably, wear-resistant material, such as fiber-reinforced plastics. The tension ring 22 is typically made from metal, such as a maraging steel. However, also fiber-reinforced plastics and/or composite materials may be suitable for certain transmission applications.

The transverse elements 30 are coupled to the endless tension elements 20, in the circumference direction of the drive belt 1, by means of a so-called positive connection 26; 36, so that considerable forces can be transferred there between in this direction for the benefit of the torque transfer between the transmission pulleys during operation. In Figure 3, it can be seen that, in the presently illustrated example of the known drive belt 1, the said positive connection 26; 36 consists of an axially oriented, radially outwardly directed bulge or ridge 26 of the endless tension element 20, which ridge 26 hooks into a recess or groove 36 in the transverse element 30 at the site of the bottom side of the said third part 35 thereof. Such an interlocking connection can, of course, also alternative be realized by providing the transverse elements 30 with a ridge, which ridges then engage in purpose-made recesses in the endless tension elements 20, or by providing the endless tension elements 20 between two adjoining transverse elements 30 with axially and/or radially, i.e. width- and/or height-wise, directed thickenings.

In the axial direction, a so-called non-positive connection, i.e. a frictional contact, exists between the transverse elements 30 and the endless tension elements 20, so that in this axial direction an endless tension element 20 can be slid relatively easily out of (the said opening in) the transverse elements 30, or conversely can be fitted therein to assemble the drive belt 1.

In the known drive belt 1 the ring carrier 21 of the endless tension element 20 is molded around its tension ring 22, e.g. by compression molding, such that these two components (21, 22) form an integral part (20). In such forming process the tension ring 22 is suspended centrally in a circular mold, where after the base material(s) of the ring carrier 21 is (are) injected into such mold. However, in the end product endless tension element 20 the radial position R1, R2 of the tension ring 22 inside the ring carrier 21 was found to vary along its circumference, as is schematically indicated in figure 3, i.e. the tension ring 22 shows a waviness or (irregular) undulation of some sort. Although, not harmful as such, this waviness appears to cause harmful vibration of the drive belt 1 during operation in the transmission.

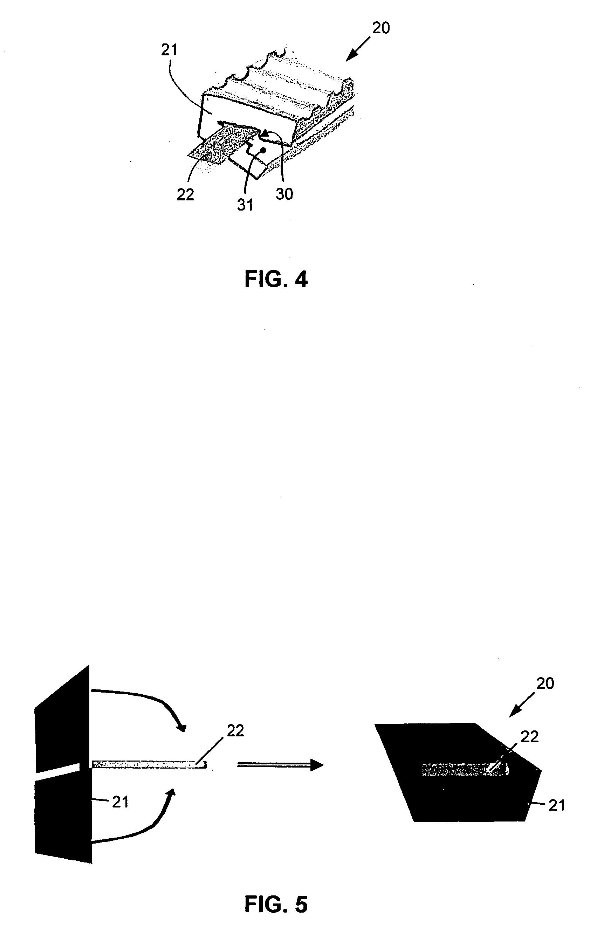

To reduce the waviness of the tension ring 22 relative to the radial direction or height of the ring carrier 21, the present invention, in a first embodiment thereof schematically illustrated in figure 4, teaches to produce the ring carrier 21 and tension ring 22 as separate components and to assemble the endless tension member 20 only afterwards. By being manufactured as a separate component, the ring carrier 21 can be produced with a highly accurate shape that supports the desired, invariable radial position of the tension ring 22. As shown in figure 4, the ring carrier 21 defines a central cavity 30, wherein the tension ring 21 is to be placed via a cut 31 in the ring carrier 21 extending between such central cavity 30 and its side face. Favorably, as likewise shown in figure 4, the cut 31 is provided radially off-center relative to the (radial) center of the central cavity 30 and/or at an angle to a long axis thereof, such that the tension ring 22 is prevented from leaving the central cavity 30 during operation all too easily.

Of course many variations of the design of the ring carrier 21 and its constituent parts 32, 33 are possible within the context of the present invention, whereof figure 5 provides an example.

Figure 5 shows a cross-section of the ring carrier 21 in the form of an extruded profile that is folded around the tension ring 22 to form the endless tension member 20.

## Claims

1. Endless tension member (20) for a drive belt (1) with an series of discrete transverse elements (30) that are provided on the endless tension member (20), which endless tension member (20) is composed of at least one tension ring (22) and a ring carrier (21) that encloses the tension ring (22) at least in part, wherein the tension ring (22) and the ring carrier (21) are provided as separate, i.e. modular parts (21; 22) of the tension member (20), wherein the ring carrier (21) is formed as a whole, i.e. is made from one integral part, and is provided with a central cavity (30) wherein the tension ring (22) is contained and with a cut (31) that extends between that cavity (30) and a side face of the ring carrier (21), **characterized in that**, the cut (31) links-up with the central cavity (30) off-center relative to a center of the central cavity (30) and/or at an angle to a long axis thereof.

2. Tension member (20) according to one or more of the preceding claims, **characterized in that**, the tension ring (22) is made from metal and is provided with a predominantly rectangular cross-section.

3. Drive belt (1) with an series of discrete transverse elements (30) having an opening wherein the tension member (20) according to one or more of the preceding claims is provided.

4. Drive belt (1) according to claim 3, **characterized in that** the transverse elements (30) compress the tension element (20) to a certain extend.

5. Drive belt (1) according to claim 3, **characterized in that** the tension ring (22) and the ring carrier (21) of the tension element (20) are glued together.

## Patentansprüche

1. Endlosspannglied (20) für einen Antriebsriemen (1) mit einer Reihe einzelner Querelemente (30), die auf dem Endlosspannglied (20) vorgesehen sind, das aus mindestens einem Spannring (22) und einem den Spannring (22) zumindest teilweise umgebenden Ringträger (21) besteht, wobei der Spannring (22) und der Ringträger (21) als getrennte, d. h. modulare, Teile (21; 22) des Spannglieds (20) vorgesehen sind, wobei der Ringträger (21) als ein Ganzes ausgebildet ist, d. h. aus einem integralen Teil hergestellt ist, und mit einem mittleren Hohlraum (30), in dem der Spannring (22) aufgenommen ist, und mit einem zwischen dem Hohlraum (30) und einer Seitenfläche des Ringträgers (21) verlaufenden Einschnitt (31) versehen ist, **dadurch gekennzeichnet, dass** der Einschnitt (31) mit dem mittleren Hohlraum (30) exzentrisch bezüglich eines Mittelpunkts des mittleren Hohlraums (30) und/oder in einem Winkel zu einer Längsachse davon verknüpft ist.

2. Spannglied (20) nach Anspruch 1, **dadurch gekennzeichnet, dass** der Spannring (22) aus Metall hergestellt und mit einem vorwiegend rechteckigen Querschnitt versehen ist.

3. Antriebsriemen (1) mit einer Reihe einzelner Querelemente (30), die eine Öffnung aufweisen, in der das Spannglied (20) nach einem oder mehreren der vorhergehenden Ansprüche vorgesehen ist.

4. Antriebsriemen (1) nach Anspruch 3, **dadurch gekennzeichnet, dass** die Querelemente (30) das Spannglied (20) in einem gewissen Ausmaß zusammendrücken.

5. Antriebsriemen (1) nach Anspruch 3, **dadurch gekennzeichnet, dass** der Spannring (22) und der Ringträger (21) des Spannglieds (20) zusammengeklebt sind.

## Revendications

1. Organe de tension sans fin (20) pour une courroie de transmission (1) comportant une série d'éléments transversaux distincts (30) se trouvant sur l'organe de tension sans fin (20), ledit organe de tension sans fin (20) étant composé d'au moins un anneau de tension (22) et d'un support d'anneau (21) qui enveloppe au moins partiellement l'anneau de tension (22), l'anneau de tension (22) et le support d'anneau (21) se présentant sous la forme de parties individuelles, c'est-à-dire modulaires (21 ; 22) de l'organe de tension (20), le support d'anneau (21) étant formé d'un seul tenant, c'est-à-dire constitué d'une pièce monobloc, et étant doté d'une cavité centrale (30) renfermant l'anneau de tension (22) et d'une entaille (31) qui s'étend entre la cavité (30) et une face latérale du support d'anneau (21), **caractérisé en ce que** l'entaille (31) est reliée à la cavité centrale (30) de manière excentrée par rapport à un centre de la cavité centrale (30) et/ou de manière oblique par rapport à un axe longitudinal de celle-ci.

2. Organe de tension (20) selon la revendication 1, **caractérisé en ce que** l'anneau de tension (22) est constitué de métal et est doté d'une section transversale principalement rectangulaire.

3. Courroie de transmission (1) comportant une série d'éléments transversaux distincts (30) comprenant une ouverture dans laquelle est disposé l'organe de tension (20) selon une ou plusieurs des revendications précédentes.

4. Courroie de transmission (1) selon la revendication 3, **caractérisée en ce que** les éléments transversaux (30) compriment l'organe de tension (20) dans une certaine mesure.

5. Courroie de transmission (1) selon la revendication 3, **caractérisée en ce que** l'anneau de tension (22) et le support d'anneau (21) de l'organe de tension (20) sont collés ensemble.
